# EUROPÄISCHE PATENTSCHRIFT

(11) **EP 3 225 728 B1**
(45) Veröffentlichungstag und Bekanntmachung des Hinweises auf die Patenterteilung: **10.06.2020**
(21) Anmeldenummer: 17164585.6
(22) Anmeldetag: 03.04.2017
(51) Int. Cl.: D04H 1/4282, D04H 1/558, F16L 59/06, E04B 1/76

(54) **FÜLLKERN FÜR VAKUUMISOLIERUNGEN UND VERFAHREN ZU DESSEN HERSTELLUNG**
FILLER CORE FOR VACUUM INSULATION, AND METHOD FOR PRODUCING SAME
NOYAU DE REMPLISSAGE POUR ISOLATIONS SOUS VIDE ET SON PROCÉDÉ DE FABRICATION

(30) Priorität: 01.04.2016 DE 102016106027
(43) Veröffentlichungstag der Anmeldung: 04.10.2017
(73) Patentinhaber: König Metall GmbH & Co. KG, 76571 Gaggenau (DE); Kerspe, Jobst H., 69256 Mauer (DE)
(72) Erfinder: Kerspe, Jobst H., 69256 Mauer (DE); Fischer, Michael, 76571 Gaggenau (DE)
(74) Vertreter: Geitz Truckenmüller Lucht Christ

(56) Entgegenhaltungen:
- EP-A1- 1 653 146
- WO-A1-01/85445
- WO-A1-94/15034
- US-A- 2 745 173
- US-A- 4 537 820
- US-A- 5 090 981
- US-A- 5 609 934

## Beschreibung

Derartige Füllkerne sind beispielsweise als Füllstoff zum Aufbau von Isolierungen, also etwa als Kernmaterial für Kühlschränke, Batteriegehäuse oder sonstige, zu isolierende Gefäße oder Körper vorbekannt.

Füllkerne für gestützte Vakuumisolierungen müssen im Wesentlichen 2 Aufgaben erfüllen:
- Ein Isolations- und/oder Vakuumraum mit seiner, vorzugsweise mikroporösen, Struktur derart auszufüllen, dass schon bei mäßigem Vakuum sehr große mittlere freie Weglängen und damit optimale Dämmeigenschaften erreicht werden.
- Zusätzlich werden besondere mechanische Eigenschaften von dem Füllkern dahingehend gefordert, so dass er beim Evakuieren des Füllkerns mindestens die äußeren Druckkräfte (Atmosphärendruck) abgefangen und die, die Isolierung begrenzenden Wandungen eben und auf Abstand gehalten werden können.

Insbesondere die mechanischen Anforderungen werden z.B. bei Anwendungen im Automotive-Sektor immer höher. So müssen z.B. Batteriegehäuse für E-Mobile rüttelsicher aufgebaut sein, große Lasten abtragen und die im Fahrbetrieb auftretenden Kräfte und Momente aufnehmen/ übertragen können.

Beide Aufgaben muss der Füllkern bei niedrigem Gewicht durch seine spezielle Mikrostruktur erfüllen.

In diesem Zusammenhang ist aus der US 4 537 820 A ein Isolierbord, sowie ein Verfahren zu dessen Herstellung vorbekannt, dass ohne signifikanten Verlust der Isolier-Eigenschaften zum Lastabtrag geeignet ist wobei dieses Isoliert-Bord unter definierten Bedingungen des zeitlichen Ablaufs, einer einzuhaltenden definierten Temperatur und eines definierten Drucks hergestellt wird. Das, nach diesem Verfahren hergestellte Faserbord wird insbesondere in Verbindung mit Hochtemperaturbatterien eingesetzt. Insbesondere soll eine Wärme-Isolierplatte bereitgestellt werden, die sowohl eine verbesserte Isolierung als auch eine hohe Druckfestigkeit ohne die Verwendung von chemischen Bindemitteln oder Klebstoff aufweist. Dabei wird das Isolierbord aus einem Stapel von zumindest im Wesentlichen bindemittelfreien Glasfaserfolien hergestellt um im Ergebnis eine Dämmplatten mit einer gewünschten Dichte von weniger als 30 Pfund pro Kubikfuß zu erreichen. Dieser Stapel wird mithilfe einer Presse unter Hitzeanwendung komprimiert bis eine Dämmplatte mit der gewünschten Dichte hergestellt ist und anschließend auf Umgebungstemperatur abgekühlt. In der Praxis hat sich allerdings gezeigt, dass der Zusammenhalt der einzelnen Lagen der Dämmplatte zumeist den Anforderungen in der Praxis nicht genügt., was wiederum eine geringere Rüttelfestigkeit und ebenso eine geringere Quer-/ Schiebebelastbarkeit des Verbundes bedeutet, was aber den Einsatz des vorbekannten Isolierbordes zumindest im Automotive-Bereich erschwert, wenn nicht sogar ausschließt.

Außerdem ist aus der WO 01/85445 A1 ein Vakuumisolator, umfassend einen weißen Glaswollkörper der eine Dichte von 0,1-0,5 g/cm^3 und eine geringe Wärmeleitfähigkeit besitzt, sowie einen nicht durchlässigen Behälter, der diesen Körper umgibt. Dabei wird der besagte Vakuumisolator durch Aufstapeln von weißer Glaswolle hergestellt, die anschließend in einem thermischen Kompressionsverfahren verpresst wird, um einen Körper mit einer Dichte von 0,1-0,5 g/cm^3 auszubilden. Anschließend wird der Körper in ein undurchlässiges Gehäuse verbracht und in diesem Gehäuse ein Vakuum erzeugt.

Aus der WO 94/15034 A1 ist eine Isolierplatte aus Glasfasern mit einer teilweise evakuierten gasdichten Umhüllung vorbekannt, wobei die besagte Isolierplatte eingekapselt ist. Dabei ist diese Isolierplatte vor dem Evakuieren der Umhüllung einem thermischen Prozess unterworfen worden, bei dem die Isolierplatte mit einer Temperatur oberhalb der Belastungstemperatur des Glases aber unterhalb der Erweichungstemperatur des Glases erhitzt wurde. Dabei erfolgt dieser thermische Prozess in einem definierten Druckbereich wobei nach dem Verpressen der Isolierplatte eine schnelle Freigabe der Isolierplatte erfolgt, jedenfalls vor dem sich anschließenden Abkühlungsprozess. Die Temperatur der Isolierplatte wird vor Anwendung des Druckverfahrens auf mindestens 260° erhöht.

Eine weitere Isolierplatte ist aus der US 5 090 981 A vorbekannt. Dabei handelt es sich um eine Mineralfaserplatte mit einer definierten Dichte, deren Fasern frei von organischen Bindemitteln sind, wobei in den Zwischenräumen des Partikelmaterials der Isolierplatte ein Gas angeordnet ist, wobei im Übrigen die Isolierplatte von einer Umhüllung umschlossen ist und auf ein definiertes Vakuum evakuiert ist. Insbesondere wird ein Verfahren zur Herstellung einer Dämmplatte beschrieben, bei dem Mineralfasern ohne Zusatz von organischen Bindemitteln, nach deren Ausrichtung unter Wärmeanwendung komprimiert werden, Nach einem Abkühlungsprozess der auf diesem Weg hergestellten Isolierplatte wird diese in eine gasdichte Umhüllung verbracht, die anschließend bis zum Erreichen eines definierten Vakuums evakuiert wird.

Ferner ist der EP 1 653 146 A1 eine weitere Wärmeisolierplatte, sowie ein Verfahren zu deren Herstellung vorbekannt. Der Herstellungsprozess sieht zunächst ein Laminieren und Anordnen der in diesem Zusammenhang eingesetzten Glasfasern vor. Anschließend werden die dem entsprechend angeordneten Glasfasern erhitzt und verpresst. Dabei wird die Isolierplatte bereits in eine gewünschte Form gebracht und durchläuft anschließend einen Abkühlungsprozess. nach dem Austrocknen des Kerns wird die Isolierplatte in eine Umhüllung eingebracht, die aus einem beutelartig laminierten Film besteht, der mit einer Öffnung versehen ist, um anschließend einen Evakuierungsprozess zur Herstellung eines Vakuums durchführen zu können, bevor dann die besagte Öffnung durch einen Heißsiegelvorgang wieder verschlossen wird.

Auch aus der US 2 745 173 A1 ist ein Verfahren zur Herstellung einer evakuierten Isolieranordnung vorbekannt, bei dem ein Glasfasermaterial mit einer definierten Dicke, umfassend eine Vielzahl von Glasfaserparlamenten mit im wesentlichen gleichartigen Faserdurchmesser, die unter Hitzeanwendung einem Kompressionsverfahren ausgesetzt sind und anschließend die auf diesem Weg hergestellte Isolierplatte abgekühlt wird, dann mit einer geschlossenen Struktur versehen wird und anschließend evakuiert wird.

Des Weiteren ist auch aus der US 5 609 934 A ein Verfahren zur Herstellung einer Isolierplatte vorbekannt. Dabei dient auch dieses Verfahren zur Herstellung einer bindemittelfreien Glasfaserdämmplatte, die von einer teilweise evakuierten gasdichten Umhüllung umschlossen ist. Dabei besitzen auch hier die eingesetzten Glasfasern eine definierte Länge und Anordnung, nämlich im Wesentlichen parallel zu den Hauptflächen der dünnen Glasfasermatte. Dabei werden mehrere dünne Glasfasermatten übereinander, geschichtet und unter Einsatz einer definierten Temperatur miteinander mittels eines entsprechenden Werkzeuges verpresst, bis die endgültige gewünschte Dicke und Dichte erreicht ist. Die auf diesem Wege erzeugte Glasfaser-Dämmplatte wird anschließend abgekühlt und mittels der erwähnten gasdichten Hülle gekapselt. Auch hier besteht das Problem, dass der Zusammenhalt der dünnen Glasfasermatten nach dem Vorgang des Verpressens zweifelhaft ist und ggf. den Anforderungen im Automotive-Bereich nicht genügt.

Das erfindungsgemäße Verfahren betrifft vornehmlich die Herstellung von Füllkernen, wie sie in Verbindung mit so genannten gestützten Vakuumisolierungen eingesetzt werden. Dabei handelt es sich hierbei um Füllkerne, die als Füllstoffe bzw.-kerne eingesetzt werden und dabei gleichzeitig eine Funktion der Wärmeisolierung und eine Stützfunktion übernehmen.

Um diesen Anforderungen gerecht zu werden, müssen die hergestellten Füllkerne eine möglichst feine oder mikroporöse innere Struktur besitzen, so dass also innerhalb des Füllkerns eine möglichst große, mittlere freie Weglänge für wandernde Gasmoleküle schon bei nur mäßigem Vakuum zur Verfügung steht, wobei in diesem Bereich i.V.m. Isolierungsanwendungen der Restgasdruck in der Isolierschicht abgesenkt wird, um die Konvektion bzw. die Wärmeleitung über Gase weitgehend auszuschalten bzw. zumindest zu reduzieren. Dabei ist nach dem Grundsatz zu verfahren, dass je feinporöser die Struktur des Füllkerns ist, der Restgasdruck entsprechend weniger abgesenkt werden muss, bis die Konvektion ausgeschaltet wird. Dabei wird eine optimale Isolierwirkung bei etwa 0,1 mbar Restgasdruck erzielt,

Gleichzeitig sollen die Füllkerne eine ausreichende Druckfestigkeit besitzen, wobei dies in Verbindung mit etwaigen Vakuumisolierungen schon allein deshalb erforderlich ist, damit die entsprechenden Boards bzw. Wandungen während der Evakuierung nicht aufgrund des Umgebungsdrucks implodieren. Die Druckfestigkeit muss mindestens eine Druckdifferenz zwischen Innen- und Außendruck von ca. 1 bar verkraften, ohne dass hierdurch das genannte Stützmaterial, also das Material der herzustellenden Füllkerne, nennenswert nachverdichtet wird.

Andererseits darf aber auch die Dichte, also der Festkörperanteil der Stützkörper bzw. der herzustellenden Füllkerne nicht zu hoch sein, da sonst die Isolationseigenschaften aufgrund der gesteigerten Festkörper-Wärmeleitung unerwünscht reduziert werden. Im Falle eines Glasfaserfüllkerns wird eine Dichte in der Größenordnung von 25-30 % der Dichte von Glas für sinnvoll erachtet. Wird dieser Wert nennenswert unterschritten, also die Dichte zu niedrig, und fällt damit beispielsweise unter einen Wert von 0,2 g/cm³, so bedeutet dies wiederum ein größeres Porenvolumen mit entsprechend reduzierten mittleren freien Weglängen, was wiederum mit einer erhöhten Gaswärmeleitung und dementsprechend verschlechterten Isoliereigenschaften bezahlt wird.

Nachdem derartige Füllkerne etwa im Automotive-Bereich beispielsweise als Isolations- und Stützmaterial in Batteriegehäusen und anderen Anwendungen zum Einsatz kommen, müssen die entsprechenden Füllkerne zumindest in diesem Anwendungsfall auch rüttelfest sein.

Bei allen Anwendungen der Füllkerne als Stützmaterial in Vakuumisolierungen bzw. als gestützte Vakuumisolierung ist darauf zu achten, dass das Stützmaterial keine ausgasenden Bestandteile wie etwa bei der Verwendung organischer Binder enthält, so dass der ansonsten bestehende Zusatzaufwand bei der Evakuierung des Stützmaterials vermieden wird.

Im Stand der Technik haben sich im Bereich der Vakuumisolierung derzeit zwei unterschiedliche Stützmaterialien als bevorzugtes Material herauskristallisiert.

Zum einen sind Isoliermaterialien bekannt, die aus pyrogener Kieselsäure hergestellt werden, wobei es sich um einen nanoporösen Werkstoff handelt, der zu entsprechenden Platten verpresst werden kann. Der Vorteil der nanoporösen Struktur dieser aus Kieselsäure-Pulver hergestellten Platten besteht darin, dass diese sehr leicht sind und unter hohem Restgasdruck stehen, so dass wie erwähnt die Wärmeleitung über Gase reduziert bzw. ausgeschaltet ist. Der Nachteil der aus pyrogener Kieselsäure hergestellten Platten besteht in ihrer niedrigen mechanischen Festigkeit, sowie einer für Automotive-Anwendungen unzureichenden Rüttelbeständigkeit sowie darin, dass deren Evakuierung zur Verbesserung der Isolationseigenschaften aufgrund der großen inneren Oberflächen sowie der mikroskopischen Eigenschaften dieses Materials sehr aufwändig ist. Im Übrigen können komplexere dreidimensionale Formen nur mit erheblichem Aufwand hergestellt werden.

Alternativ werden Faserkerne eingesetzt. Es handelt sich dabei um ebene Platten, die aus geeigneten Vormaterialien, wie z.B. Vliesen, verdichtet werden. Die Vliese sollen ein möglichst gleichmäßiges Flächengewicht und die oben beschriebene Faserorientierung aufweisen - das kann sowohl durch ein Nassformverfahren als auch durch Trockengelege nach der Faserherstellung erfolgen.

Ausgehend von diesem Stand der Technik liegt der Erfindung die Aufgabe zu Grunde, einen Füllkern mit einer guten Form- und Dimensionstreue herzustellen, das darüber hinaus eine hinreichende mechanische Festigkeit besitzt, um entsprechend rüttelbeständig zu sein, und im Übrigen gut evakuierbar ist, sowie gute Dämmeigenschaften besitzt. Außerdem sollen die nach dem erfindungsgemäßen Verfahren hergestellten Füllkerne vollständig frei von Bindemitteln sein.

Diese der Erfindung zu Grunde liegende Aufgabe wird durch ein Herstellungsverfahren für Füllkerne gemäß Anspruch 1 gelöst bzw. durch ein nach dem erfindungsgemäßen Verfahren hergestellter Füllkern, gemäß Anspruch 16. Vorteilhafte Ausgestaltungen der Erfindung können den abhängigen Ansprüchen 2-15 entnommen werden.

Gemäß dem geltenden Anspruch 1 wird der Füllkern in folgenden Schritten hergestellt:
Zunächst werden Fasermatten oder Vliese mit einer zumindest annähernd gleichmäßigen Dichteverteilung in ein Presswerkzeug eingelegt, das vorzugsweise beheizbar ist. Dabei ist idealerweise der mittlere Faserdurchmesser der Fasermatten oder Vliese bereits in Abhängigkeit von den Anforderungen an den zu fertigenden Füllkerns sowie der erforderlichen Dichte des Füllkerns gewählt worden. Außerdem wird das Vormaterial, also die Fasermatten oder Vliese derart in das Presswerkzeug eingelegt, dass dabei eine vorgegebene Orientierung der Fasern eingehalten wird, insbesondere nach abgeschlossenem Pressvorgang keine Fasern des herzustellenden Füllkerns in der Hauptwärmeflussrichtung verlaufen. Der nach diesem Verfahren hergestellte Füllkern ist vollständig frei von Bindemitteln und wird ausschließlich durch ein mechanisches Verhaken der Fasern in der vorgegebenen Form gehalten. Ein nach diesem Verfahren hergestellter Füllkern besitzt bei entsprechendem Vakuum sehr gute Dämmeigenschaften, eine hohe Rüttelbeständigkeit sowie eine hohe Form- und Dimensionstreue. Außerdem der erfindungsgemäß hergestellte Füllkern darüber hinaus auch noch gut evakuierbar, indem in einem späteren Arbeitsschritt, also nach der Herstellung des Füllkerns, im eingebauten Zustand des Füllkerns die Evakuierung mittels einer geeigneten Vakuumpumpe oder mehrerer Vakuumpumpen erfolgt.

Für den Fall, dass beabsichtigt ist, dass der herzustellenden Füllkern in einer Vakuumisolierung verwendet werden soll, hat es sich bewährt, nach der Herstellung des Füllkerns gemäß dem erfindungsgemäßem Verfahren, bei der späteren Evakuierung des Füllkerns den Restgasdruck so einzustellen, dass eine möglichst große freie Weglänge der bei der Evakuierung im Füllkern verbliebenen Restgasmoleküle sichergestellt ist.

Das Verfahren zur Herstellung des Füllkerns ist vorteilhafter Weise von einer Wärmebehandlung derart begleitet, dass die Fasern hierdurch in einen spannungsfreien Zustand verbracht werden. Die fragliche Wärmebehandlung stellt sicher, dass der auf diesem Wege hergestellte Füllkern auch die notwendige mechanische Festigkeit im späteren Betrieb besitzt. Die mittels des Heizelementes für den Pressvorgang erzeugte Temperatur wird in Abhängigkeit von den eingesetzten Glasfasern oder vergleichbaren Fasern derart gewählt, dass die Schmelztemperatur der Glasfasern oder vergleichbarer Fasern, wie etwa künstliche Mineralfasern, z.B. Keramikfasern, zu keinem Zeitpunkt erreicht oder überschritten wird. Dies deshalb, weil ansonsten die Glasfasern oder vergleichbaren Fasern zu einem festen Kuchen zusammensintern würden. In den meisten Fällen wird eine Temperatur gewählt, die etwa bei zwei Drittel der Erweichungstemperatur der eingesetzten Glasfasern oder vergleichbaren Fasern liegt. Dies dient insbesondere dem Abbau der Eigenspannungen in den hier eingesetzten Glasfasern.

Dabei erfolgt die Wärmebehandlung wiederum unter Berücksichtigung des Zusammenhangs von dem Durchmesser der eingesetzten Fasern, der Faserdichte in den Stützkörper sowie der gewünschten Druckfestigkeit des herzustellenden Füllkörpers.

Die mittels des Presswerkzeugs einwirkende Presskraft wird in Abhängigkeit von der gewünschten Formteildichte des herzustellenden Füllkerns gewählt, wobei insbesondere eine Formteildichte in Höhe von ca. 0,26 g/ccm als vorteilhaft angesehen wird. Die Dichte von 0,26g/ccm gilt dabei für einen mittleren Faserdurchmesser von 3 µm; bei dickeren Fasern kann sich die erforderliche Dichte zu höheren Werten, etwa 0,35 g/ccm bei ca. 10 µm, verschieben oder auch hin zu niedrigeren Dichten in Verbindung mit dem Einsatz dünnerer Fasern. Die für die Verdichtung eingestellte Presskraft bestimmt somit in Abhängigkeit von der eingebrachten Fasermenge und den gewünschten Abmessungen, insbesondere der gewünschten Stärke des Füllkerns die Formteildichte des herzustellenden Füllkerns.

Mittels des Presswerkzeugs werden dann anschließend die Fasermatten oder Vliese zu einem Füllkern verdichtet, wobei im selben Arbeitsschritt mittels desselben Presswerkzeugs eine zwei- oder dreidimensionale Formgebung bzw. Konturgebung erfolgt und anschließend der Füllkern nach Entfernung aus dem Presswerkzeug hergestellt ist.

In abermals vorteilhafter Ausgestaltung wird das Verfahren mit Glasfasern oder vergleichbaren Fasern durchgeführt, die einen Faserdurchmesser zwischen 1 und 6 µm besitzen. Die Dichte wird entsprechend der vorstehenden Ausführungen in Abhängigkeit vom Faserdurchmesser und den geforderten Produkteigenschaften, also dem Dämmvermögen und den mechanischen Eigenschaften des zu fertigenden Füllkörpers eingestellt, indem die in die Pressform eingebrachte Fasermenge auf das gewünschte Maß verdichtet wird.

Mittels des eingesetzten Presswerkzeugs können auch vorgegebene Konturen in den herzustellenden Füllkern eingeprägt werden, indem das Presswerkzeug entsprechend profiliert ist.

In konkreter Ausgestaltung kann etwa im Bereich der Stoßkanten des herzustellenden Füllkerns ein Stufenfalz in die Stoßkanten eingeprägt werden, wobei dieser vorteilhaft so ausgestaltet wird, dass hinsichtlich der Stoßkanten eines Füllkerns die Stufenfalzen in die einander abgewandten Oberflächen des Füllkerns so eingeprägt werden, dass ein Stufenfalz an der einen Stoßkante in die Oberseite des Füllkerns eingeprägt wird und der andere Stufenfalz an der anderen Stoßkante in die Unterseite des Füllkerns. Diese Ausgestaltung der Stoßkanten erleichtert bei großflächigeren Vakuumisolierungen bzw. Stützkörpern, die aus mehreren Füllkernen zusammengesetzt werden, deren Zusammensetzung, weil dann durch die Rücksprünge eine Verklammerung der aneinander angrenzenden Füllkerne bewirkt wird, so dass deren Zusammenbau und auch deren Zusammenhalt erleichtert bzw. verbessert ist.

Gemäß dem geltenden Anspruch 10 empfiehlt es sich, Füllkerne, die für Hochtemperaturanwendungen vorgesehen sind, unter Verwendung keramischer Fasern nach dem erfindungsgemäßen Verfahren herzustellen.

Gemäss der Erfindung werden Füllkerne mit einem Schichtaufbau hergestellt, wobei hierzu in das Presswerkzeug Schichten unterschiedlicher Zusammensetzung eingelegt und miteinander zu dem erfindungsgemäßen Füllkern verpresst werden, der dann den gewünschten Schichtaufbau besitzt.

In konkreter Ausgestaltung wird zwischen einer ober- und einer unterseitigen Lage aus je einem Glasfaservlies eine Zwischenlage aus einem vorzugsweise leichten, silikatischen Granulat eingelegt , das abermals bevorzugt zumindest überwiegend aus Mikro-Hohlglaskugeln aufgebaut ist. Derartige Füllkerne sind aufgrund ihres geringen Gewichtes für optimal dämmende, evakuierte Leichtbaustrukturen einsetzbar.

In alternativer Ausgestaltung kann ein Schichtaufbau auch dazu eingesetzt werden, einen Füllkern mit einem inneren Leichtkern zu versehen, indem wiederum ober- und unterseitig je ein Glasfaservlies in das Presswerkzeug eingelegt wird und in einer Zwischenlage zwischen den Glasfaservliesen ein Leichtkern eingelegt wird. Dies hat den Vorteil eines insgesamt geringeren Flächengewichtes des auf diese Weise hergestellten Füllkerns.

In abermaliger Weiterbildung des Schichtaufbaus können in das Presswerkzeug auch Glasfaservliese mit Abschnitten höherer und/oder geringerer Dichte als die übrigen Abschnitte des Glasfaservlieses eingelegt werden und somit Füllkerne hergestellt werden, die abschnittsweise eine unterschiedliche Dichte besitzen, indem in diesen Bereichen der Glasfaseranteil lokal erhöht ist. So können maßgeschneiderte Stützelemente gefertigt werden, die beispielsweise in den Bereichen verstärkt bzw. versteift sind, in denen auf den Füllkern höhere Kräfte einwirken, also beispielsweise in Bereichen der Krafteinleitung oder in Befestigungs- und/oder Verbindungsbereichen des Füllkerns, in denen ebenfalls erhöhte Kräfte in das erfindungsgemäß hergestellten Füllkern eingeleitet werden.

Die bereits erwähnte Einprägung von Konturen in den Füllkern kann in vorteilhafter Weise dazu ausgenutzt werden, dass Hohlräume, insbesondere Kanäle, in den Füllkern eingeprägt werden. Diese Ausgestaltung der gemäß dem erfindungsgemäßen Verfahren hergestellten Füllkerne dient insbesondere einer Verbesserung der Evakuierbarkeit dieser Füllkerne. Dies macht insbesondere im Zusammenhang mit der Herstellung von großflächigen Vakuumisolierungen Sinn, bei denen insbesondere bei abnehmendem Restgasdruck die den Füllkern im Einbauzustand umgebende vakuumdichte Hülle bereits stark gegen den Stützkörper angepresst ist, so dass dann im weiteren eine weitere Entgasung bzw. Evakuierung des innenliegenden Füllkerns, also der Vakuumisolierung nur noch langsam möglich ist. Dem kann durch die Einprägung schmaler Kanäle in den Füllkern insbesondere in den Bereichen, die in der Einbaulage dem Außenbereich, also der Umhüllung des Füllkerns zugewandt sind entgegengewirkt werden. In vorteilhafter Ausgestaltung kann an eine fächerförmige Gestaltung der Kanäle gedacht werden bzw. an eine sternartige Gestaltung, wobei die Kanäle dementsprechend in einem zentralen Bereich zusammenlaufen bzw. einander kreuzen, so dass dann an dieser zentralen Stelle oder Kreuzungsstelle sinnvollerweise ein Saugstutzen oder Vakuumport zur Evakuierung des Füllkerns bzw. der späteren Vakuumisolierung angesetzt werden kann. In alternativer Ausgestaltung ist auch eine gitterförmige Einprägung der Kanäle denkbar. Die eingeprägten Kanäle haben idealerweise eine Breite von maximal 10 mm und eine Tiefe von höchstens 5 mm. Dabei sollte die Kanaltiefe aus nachvollziehbaren Gründen in einem Bezug zur Stärke des Füllkerns, also zu der gesamten Isolationsdicke stehen, so dass durch die eingeprägten Kanäle die gewünschte Dämmwirkung nicht übermäßig nachteilig beeinflusst wird.

In abermals vorteilhafter Weiterbildung des erfindungsgemäßen Verfahrens ist das Presswerkzeug entweder aktiv beheizt oder mittels eines das Presswerkzeug umschließenden Ofens passiv beheizt. Im Falle einer in das Presswerkzeug eingebauten Heizung erfolgt der Pressvorgang als solcher unter dementsprechend erhöhter Temperatur. Alternativ kann der Pressvorgang als solcher auch kalt, das heißt unbeheizt, durchgeführt werden und anschließend das verriegelte Presswerkzeug in einem Ofen beheizt werden.

Die gemäß dem erfindungsgemäßen Verfahren hergestellten Füllkerne besitzen üblicherweise eine Wärmeleitfähigkeit λ in einem Bereich zwischen 0,001 W/mK und 0,004 W/mK bei einem Restgasdruck von 0,1 mbar und einer Mitteltemperatur zwischen 50°C und 300°C.

Die Erfindung wird nachstehend anhand einiger Ausführungsbeispiele näher erläutert, ohne dass der Schutzbereich der Erfindung auf die Ausführungsbeispiele beschränkt wird.

Es zeigen:
- Fig. 1:: ein Presswerkzeug mit eingelegtem Faservlies in einer Querschnittansicht in einer Prinzipdarstellung,
- Fig. 2:: einen Füllkern nach der Entformung aus dem Presswerkzeug gemäß Figur 1 in einer Querschnittansicht,
- Fig. 3:: eine in ein Presswerkzeug einzulegende Matte im Schichtaufbau vor der Verdichtung in einer Querschnittansicht,
- Fig. 4:: einen aus der Matte im Schichtaufbau gemäß Figur 3 hergestellten Füllkern in einer Querschnittansicht,
- Fig. 5:: einen Füllkern mit eingeprägten Kanälen in einer Querschnittansicht,
- Fig. 6:: einen Füllkern mit eingeprägten sternförmigen Kanälen in einer Draufsicht und
- Figur 7:: ein Presswerkzeug zur Herstellung dreidimensionaler Formkörper bzw. Füllkernen in einer vereinfachten Prinzip-Darstellung.

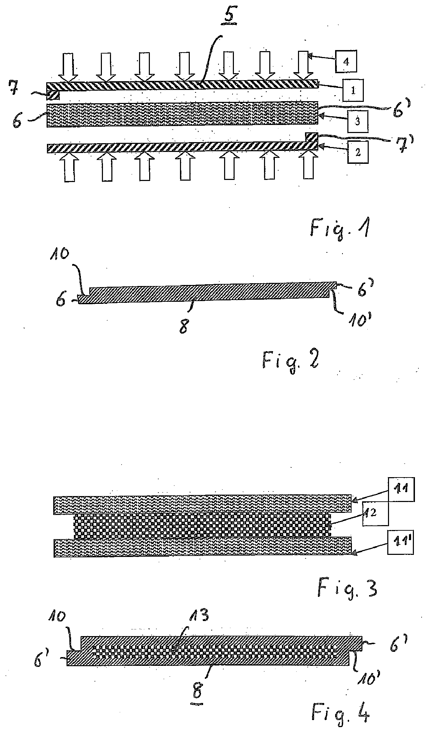

Figur 1 zeigt in einer Querschnittansicht ein Presswerkzeug 5 in einer Prinzipskizze mit einem Werkzeugoberteil 1 und einem Werkzeugunterteil 2. Beide Werkzeugteile 1 und 2 sind beheizbar ausgebildet. Die beiden Werkzeugteile 1, 2 stellen also die Halbschalen des nicht weiter dargestellten Presswerkzeugs dar, die mittels der ober- und unterseitig einwirkenden Presskraft 4 zusammengepresst werden können, so dass das zwischen den Halbschalen angeordnete, zunächst unverdichtete und unverformte Faservlies 3 unter Einwirkung einer Presskraft 4 verdichtet werden kann.

Dabei wird die mittels des Presswerkzeugs eingeleitete Presskraft gemäß der Erfindung in Abhängigkeit von der gewünschten Formteildichte des herzustellenden Füllkerns 8 gewählt. Idealerweise werden hierbei die Fasern der Ausgangsmaterialien, also der Faservliese 3 zu einer nahezu mikroporösen Struktur verdichtet, die bereits eine niedrigste Wärmeleitung in einem Evakuierungszustand, der einem Grobvakuum entspricht, erreicht. Dabei besteht ein wichtiger Zusammenhang zwischen Faserdurchmesser der eingesetzten Fasern und deren Dichte im verdichteten Zustand, also nach Abschluss des Pressvorganges. Hier gibt es für jeden Fasern bzw. genauer gesagt für jeden Faserdurchmesser eine jeweils optimale Dichte mit minimaler Wärmeleitfähigkeit des unter Berücksichtigung dieses Gesetzes hergestellten Füllkörpers. , Eine von diesem Optimum abweichende Dichte bzw. eine sich von der hieraus ergebenden Presskraft der eingesetzten Presse abweichende Presskraft beim Verdichtungsvorgang, wird dementsprechend mit einer höheren Wärmeleitfähigkeit bzw. schlechteren Isolationsfähigkeit des Füllkörpers bzw. der mithilfe des Füllkörpers hergestellten Vakuumisolierung bezahlt.

Dabei ist sowohl an das Werkzeugoberteil 1 als auch an das Werkzeugunterteil 2 im Bereich der Stoßkanten 6, 6'je ein Stempel 7, 7' an das Werkzeugoberteil 1 bzw. an das Werkzeugunterteil 2 angeformt, so dass beim Verpressen des Faservlieses 3 in dem Bereich dieser Stoßkanten 6, 6' je ein Rücksprung in die Stoßkanten 6, 6' derart eingeprägt wird, dass die eine Stoßkante 6 nach der Entfernung aus dem Presswerkzeug 5 einen oberseitigen Stufenfalz 10 und die andere Stoßkante 6', nach der Entfernung aus dem Presswerkzeug 5, einen unterseitigen Stufenfalz 10' aufweist.

Figur 2 zeigt in einer Querschnittansicht einen nach dem Pressvorgang gemäß Figur 1 hergestellter Füllkern 8 bzw. das durch die Verdichtung in dem Presswerkzeug 5 hergestelltes Stützkörper-Formteil. Wie im Zusammenhang mit Figur 1 ausgeführt, weist der Füllkern 8 nunmehr im Bereich der Stoßkanten 6, 6' je einen Stufenfalz 10, 10' aus, wobei der an der eine Stoßkante 6 angeformte Stufenfalz 10 oberseitig angeordnet ist und der andere Stufenfalz 10' an der Stoßkante 6' unterseitig angeformt ist. Dementsprechend können mehrere in diesem Verfahren hergestellte Füllkerne 8 im Bereich der Stoßkanten 6, 6' so aneinandergefügt werden, dass sich die Füllkerne 8 im Bereich der Stoßkanten 6, 6' miteinander verklammern und somit in diesem Bereich eine höhere Steifigkeit besitzen und insgesamt deren Montage zur Bildung großflächiger Stütz- und Isolationskörper erleichtert ist.

Figur 3 zeigt eine Vorstufe zur Herstellung eines Füllkörpers im Schichtaufbau, das gegenüber herkömmlichen Füllkörpern 8 ein geringeres Flächengewicht aufweisen soll. Hierzu weist dieses Vorprodukt eine ober- und eine unterseitige Schicht auf, jeweils bestehend aus einem Glasfaservlies 11, 11', zwischen denen in einer Zwischenlage ein leichtes silikatisches Granulat 12 eingelegt ist, das in diesem Ausführungsbeispiel aus Mikro-Hohlglaskugeln hergestellt ist.

Dieses Vorprodukt wird anschließend in das beheizbare Presswerkzeug 5 gemäß Figur 1 eingelegt und im Rahmen des Pressvorgangs derart verdichtet, dass gemäß der Darstellung in Figur 4 in das aus diesem Vorgang hervorgehende Endprodukt, also in den Füllkern 8, ein Leichtkern 13 integriert ist. Auch dieser Füllkern 8 ist wiederum im Bereich seiner Stoßkanten 6, 6' jeweils mit einem Stufenfalz 10, 10' versehen, so dass auch dieser Füllkern 8 zur Herstellung großflächiger Isolations- und/oder Stützkörper zusammengefügt werden können, wobei sich im Bereich der Stoßkanten 6, 6', wie bereits beschrieben, eine Verklammerung des Füllkerns 8 ausbildet.

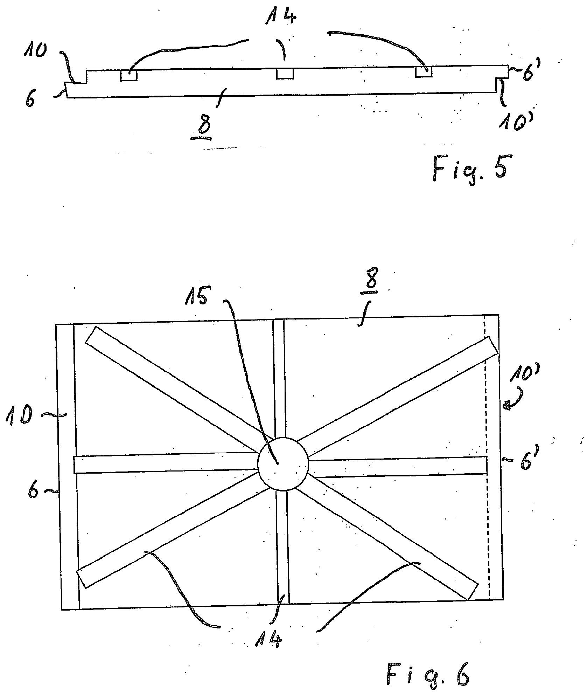

Figur 5 zeigt eine alternative Ausgestaltung der gemäß Figur 1 hergestellten Füllkerns 8 mit eingeprägten Kanälen 14. Diese eingeprägten Kanäle 14 dienen dazu, die Evakuierbarkeit des Füllkerns 8 zu erleichtern. Insbesondere im Falle großflächiger, aus den Füllkernen 8 hergestellten Vakuumisolierungen besteht das Problem, dass mit zunehmender Evakuierung, also bei abnehmendem Restgasdruck, die den Füllkern 8 umschließende, vakuumdichte Hülle an den von dem Füllkern 8 gebildeten Stützkörper angepresst wird, so dass eine Entgasung bzw. Evakuierung in diesem Bereich nur noch erschwert und jedenfalls mit höherem Zeitaufwand möglich ist. Um dem entgegenzuwirken, sind gemäß Figur 5 in der der vakuumdichten Hülle zugewandten Oberfläche die genannten Kanäle 14 eingeprägt.

Gemäß der in Figur 6 dargestellten Draufsicht auf einen derartigen Füllkern 8 sind die Kanäle 14 mit Vorteil sternförmig in die Oberfläche des Füllkerns 8 eingeprägt und laufen dementsprechend im Zentrum 15 des Füllkerns 8 zusammen, das als kreisförmige Vertiefung in die Oberfläche des Füllkerns 8 eingeprägt ist. Idealerweise wird der Saugstutzen einer Vakuumpumpe bzw. der so genannte Vakuumport in diesem Bereich zur Evakuierung des Füllkerns 8 angesetzt. Alternativ ist auch eine gitterförmige Anordnung der Kanäle 14 denkbar.

Dabei hat es sich bewährt, wenn die Kanäle 14 eine Breite von max. 10 mm sowie eine Tiefe von höchstens 5 mm besitzen. Die Kanaltiefe muss selbstverständlich auf die Gesamtisolationsdicke bzw. auf die Stärke des Füllkerns 8 abgestimmt sein, damit im Bereich des Verlaufs der Kanäle 14 die Isolationswirkung des Füllkerns 8 nicht übermäßig reduziert ist.

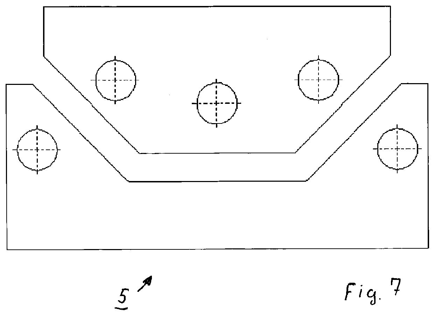

Gemäß der Darstellung in Figur 7 können in Verbindung mit dem erfindungsgemäßen Verfahren auch Presswerkzeuge zur Herstellung drei-dimensionaler Formkörper bzw. Füllkerne 8 alternativ zu den vorstehende dargestellten flächigen Ausgestaltungen auch mit anderen, abweichenden Konturen, etwa Rohrhalbschalen oder Eck-Verbinder, versehen sein und insbesondere auch dreidimensional ausgeformt sein. Hierzu muss, wie erwähnt, lediglich das Presswerkzeug 5 beispielsweise wie in Fig. 7 dargestellt ausgestaltet sein.

### BEZUGSZEICHENLISTE

- 1: Werkzeugoberteil
- 2: Werkzeugunterteil
- 3: Faservlies
- 4: Presskraft
- 5: Presswerkzeug
- 6,6': Stoßkante
- 7, 7': Stempel
- 8: Füllkern
- 10,10': Stufenfalz
- 11, 11': Glasfaservlies
- 12: Granulat
- 13: Leichtkern
- 14: Kanäle
- 15: Zentrum

## Patentansprüche

1. Verfahren zur Herstellung eines Füllkerns (8) mit einem Schichtaufbau mit folgenden Schritten:
- ausgehend von einer Fasermatte bzw. einem Vlies, aus Fasern, deren mittlerer Faserdurchmesser in Abhängigkeit von den jeweils gewünschten Materialeigenschaften des zu fertigenden Füllkerns (8), insbesondere dessen Dämm- und Stützeigenschaften, gewählt sind,
- wobei die Fasermatten oder -vliese (3) derart in das Presswerkzeug (5) eingelegt werden, dass eine durch ein Nassformverfahren oder durch ein Trockengelege nach der Faserherstellung die vorgegebene Orientierung der Fasern eingehalten wird, so dass nach Abschluss des Pressvorgangs keine Fasern des herzustellenden Füllkerns (8) in der Hauptwärmeflussrichtung verlaufen,
- wobei die Füllkerne (8) im Rahmen des erfindungsgemäßen Verfahrens derart hergestellt werden, dass zunächst in das Presswerkzeug (5) unterschiedliche Schichten, nämlich ober- und unterseitig je ein Glasfaservlies (11, 11') unter Zwischenlage eines, vorzugsweise leichten, silikatischen Granulats (12) eingelegt wird, vorzugsweise zumindest überwiegend bestehend aus Mikro-Hohlglaskugeln,
- anschließend werden diese Fasermatten bzw. -vliese (3) mittels eines, vorzugsweise beheizbaren, Presswerkzeugs (5) zu einer zumindest annähernd mikroporösen Struktur derart verdichtet, dass innerhalb des Füllkerns (8) eine möglichst große mittlere freie Weglänge für wandernde Gasmoleküle auch bei nur mäßigen Vakuum zur Verfügung steht, wobei hierzu der Restgasdruck innerhalb des Füllkerns (8) je feinporöser die Struktur des Füllkerns (8) ist entsprechend weniger abgesenkt wird, um die Konvektion über Gase auszuzuschalten oder zumindest zu reduzieren ,
- wobei der Verdichtungsgrad der Fasern in Abhängigkeit vom jeweiligen Faserdurchmesser derart eingestellt wird, dass der Füllkern (8) eine möglichst geringe Wärmeleitfähigkeit besitzt, wobei es hierbei jeweils ein definiertes Optimum des Verdichtungsgrades gibt, ober- und unterhalb dessen die Wärmeleitfähigkeit des Füllkerns (8) steigt, und
- wobei mittels desselben Presswerkzeugs (5) im selben Arbeitsschritt eine zwei- oder dreidimensionale Form- und/oder Konturgebung des Füllkerns (8) erfolgt,
- und der nach diesem Verfahren hergestellte Füllkern (8) vollständig frei von Bindemitteln ist und ausschließlich durch ein mechanisches Verhaken der Fasern in der vorgegebenen Form gehalten ist.

2. Verfahren nach Anspruch 1, **dadurch gekennzeichnet, dass** im Falle der Verwendung des Füllkerns (8) in Vakuumisolierungen bei der Evakuierung des Füllkerns (8) jeweils der Restgasdruck so eingestellt wird, dass jeweils eine möglichst große freie Weglänge der im Füllkern (8) bei der Evakuierung verbliebenen Restgasmoleküle gegeben ist.

3. Verfahren nach Anspruch 1 oder 2, **dadurch gekennzeichnet, dass** dem Presswerkzeug (5) ein Heizelement zugeordnet ist, so dass während des Pressvorganges des Herstellungsverfahrens des Füllkerns (8) eine Wärmebehandlung des Füllkerns (8) im Sinne einer Thermokompression derart erfolgt, dass die Fasern in einen spannungsfreien Zustand verbracht werden und nach der Entfernung aus dem Presswerkzeug (5) der Füllkern (8) hergestellt ist.

4. Verfahren nach Anspruch 3, **dadurch gekennzeichnet, dass** die Wärmebehandlung im Hinblick auf die gewünschte Druckfestigkeit des herzustellenden Füllkörpers unter Berücksichtigung eines Zusammenhangs zwischen der nach abgeschlossenem Herstellungsverfahren gegebenen Kompressibilität des Füllkerns (8) und des Faserdurchmessers der eingesetzten Fasen, sowie deren Dichte besteht.

5. Verfahren nach Anspruch 4, **dadurch gekennzeichnet, dass** der Pressvorgang bei einer Temperatur, die zumindest im Wesentlichen zwei Drittel der Erweichungstemperatur des zu verpressenden Glasfaservlieses (11. 11') oder des vergleichbaren Faservlieses (3) entspricht, jedenfalls aber unterhalb der Schmelztemperatur der zu verpressenden Glasfasern oder der vergleichbaren Fasern liegt, durchgeführt wird.

6. Verfahren nach einem oder mehreren der vorhergehenden Ansprüche, **dadurch gekennzeichnet, dass** das Verfahren mit Glasfasern oder mit vergleichbaren Fasern, jeweils mit einem Faserdurchmesser zwischen 1 µm und 6 µm durchgeführt wird.

7. Verfahren nach einem oder mehreren der vorhergehenden Ansprüche, **dadurch gekennzeichnet, dass** die Presskraft des Presswerkzeugs (5), die Formfüllung bzw. Fasermenge in Abhängigkeit von der gewünschten Formteildichte des herzustellenden Füllkerns (8) in Abhängigkeit von einer Formteildichte in Höhe von ca. 0,26 g/ccm einstellbar ist.

8. Verfahren nach einem oder mehreren der vorhergehenden Ansprüche, **dadurch gekennzeichnet, dass** mittels des Presswerkzeugs (5) eine Kontur in den herzustellenden Füllkern (8) eingeprägt wird.

9. Verfahren nach Anspruch 8, **dadurch gekennzeichnet, dass** mittels des Presswerkzeugs (5) im Bereich der Stoßkanten (6, 6') des herzustellenden Füllkerns (8) an wenigstens zwei einander parallelen Stoßkanten (6, 6'), also an der rechten, linken Stoßkante (6, 6') und/oder an der oberen, unteren Stoßkante in die einander abgewandten Oberflächen dieser parallelen Stoßkanten (6, 6') mittels zwei einander gegenüberliegenden, in dem Presswerkzeug (5) entsprechend angeordneten Stempeln (7, 7') je eine Stufenfalz (10, 10') in diese Stoßkanten (6, 6') eingeprägt wird, so dass die Stoßkantenpaare einen auf der Oberseite des Füllkerns (8) eingeprägten Stufenfalz (10) und einen auf der Unterseite des Füllkerns (8) eingeprägten Stufenfalz (10') besitzen.

10. Verfahren nach einem oder mehreren der vorhergehenden Ansprüche, **dadurch gekennzeichnet, dass** die mittels des Verfahrens hergestellten Füllkerne (8) insbesondere für Hochtemperaturanwendungen unter Verwendung hochtemperaturfester, vorzugsweise keramischer, Fasern hergestellt werden.

11. Verfahren nach einem oder mehreren der vorhergehenden Ansprüche, **dadurch gekennzeichnet, dass** in das Presswerkzeug (5) ober- und unterseitig je ein Glasfaservlies (11, 11') unter Zwischenlage eines Leichtkerns (13) eingelegt wird.

12. Verfahren nach Anspruch 11, **dadurch gekennzeichnet, dass** in das Presswerkzeug (5) ein Glasfaservlies (11) mit Abschnitten höherer und/oder geringerer Dichte als die anderen Abschnitte des Glasfaservlieses (11) eingelegt wird bzw. mehrere Glasfaservliese (11, 11') mit jeweils unterschiedlicher Dichte in das Presswerkzeug (5) eingelegt und in diesem zu einem Füllkern (8) mit abschnittsweise variabler und an die jeweiligen Nutzungsanforderungen angepasster Dichte verpresst werden.

13. Verfahren nach einem oder mehreren der vorhergehenden Ansprüche, **dadurch gekennzeichnet, dass** das Presswerkzeug (5) mit in Richtung des bzw. der in das Presswerkzeug eingelegten Glasfaservlieses oder Glasfaservliese (11, 11') vorspringenden Konturen versehen ist, mittels derer während des Pressvorgangs Hohlräume, vorzugsweise Kanäle (14), in das Glasfaservlies bzw. die Glasfaservliese einprägbar ist bzw. sind.

14. Verfahren nach einem oder mehreren der vorhergehenden Ansprüche, **dadurch gekennzeichnet, dass** das Presswerkzeug (5) als solches aktiv beheizbar ist oder mittels eines das Presswerkzeug (5) umschließenden Ofens passiv beheizbar ist.

15. Verfahren nach einem oder mehreren der vorhergehenden Ansprüche, **dadurch gekennzeichnet, dass** mit diesem Verfahren auch 3D-Formkörper, etwa Rohrhalbschalen oder Eck-Verbinder, mittels entsprechender Presswerkzeuge (5) herstellbar sind.

16. Füllkern hergestellt nach einem Verfahren gemäß den vorhergehenden Ansprüchen 1-15, **dadurch gekennzeichnet, dass** der Füllkern (8) eine Wärmeleitfähigkeit λ in einem Bereich zwischen 0,001 W/mK und 0,004 W/mK bei einem Restgasdruck von 0,1 mbar und einer Mitteltemperatur zwischen 50 und 300°C besitzt.

## Claims

1. Method for producing a filler core (8) with a layered structure, comprising the following steps:
- starting from a fiber mat or a nonwoven, made of fibers whose mean fiber diameter is selected as a function of the respectively desired material properties of the filler core (8) to be produced, in particular its insulating and supporting properties,
- wherein the fiber mats or nonwovens (3) are inserted into the pressing tool (5) in such a way that a predetermined orientation of the fibers is maintained by a wet forming process or by a dry lay-up after fiber production, so that after completion of the pressing process no fibers of the filler core (8) to be produced extend in the main heat flow direction,
- wherein the filler cores (8) are produced within the scope of the method according to the invention in such a way that at first different layers, namely a fiberglass mat (11, 11') each on the upper and lower sides respectively, are inserted into the pressing tool (5) with the interposition of a, preferably light, silicate granulate (12), preferably at least predominantly consisting of micro hollow glass spheres,
- then these fiber mats or nonwovens (3) are compressed by means of a preferably heatable pressing tool (5) to form an at least approximately microporous structure in such a way that a largest possible mean free path length for migrating gas molecules is available within the filler core (8) even if the vacuum is only moderate, wherein the residual gas pressure within the filler core (8) is lowered to a correspondingly lesser extent the more finely porous the structure of the filler core (8) is, in order to deactivate or at least reduce convection via gases,
- wherein the degree of compression of the fibers is set depending on the respective fiber diameter in such a way that the filler core (8) has the lowest possible thermal conductivity, wherein there is in this case a respective defined optimum of the degree of compression above and below which the thermal conductivity of the filler core (8) increases, and
- wherein a two- or three-dimensional shaping and/or contouring of the filler core (8) takes place by means of the same pressing tool (5) in the same working step,
- and the filler core (8) produced by this method is completely free of binders and is held in the predetermined shape solely by mechanical interlocking of the fibers.

2. Method according to claim 1, **characterized in that** when the filler core (8) is used in vacuum insulation, the residual gas pressure during the evacuation of the filler core (8) is respectively set in such a way that a largest possible free path length of the residual gas molecules remaining in the filler core (8) during evacuation is given in each case.

3. Method according to claim 1 or 2, **characterized in that** a heating element is associated with the pressing tool (5), so that during the pressing procedure of the production process of the filler core (8) a heat treatment of the filler core (8) in the sense of thermocompression takes place in such a way that the fibers are brought into a stress-free state and after removal from the pressing tool (5) the filler core (8) is produced.

4. Method according to claim 3, **characterized in that** the heat treatment is carried out with regard to the desired compressive strength of the filler body to be produced, taking into account a relationship between the compressibility of the filler core (8) given after the completed production process and the fiber diameter of the fibers used, as well as their density.

5. Method according to claim 4, **characterized in that** the pressing process is carried out at a temperature which corresponds at least substantially to two thirds of the softening temperature of the fiberglass mat (11, 11') or comparable nonwoven (3) to be pressed, but in any case is below the melting temperature of the glass fibers or comparable fibers to be pressed.

6. Method according to one or more of the preceding claims, **characterized in that** the method is carried out with glass fibers or with comparable fibers, each with a fiber diameter between 1 µm and 6 µm.

7. Method according to one or more of the preceding claims, **characterized in that** the pressing force of the pressing tool (5), the mold filling or fiber quantity can be adjusted as a function of the desired molded part density of the filler core (8) to be produced as a function of a molded part density of approximately 0.26 g/ccm.

8. Method according to one or more of the preceding claims, **characterized in that** a contour is impressed into the filler core (8) to be produced by means of the pressing tool (5).

9. Method according to claim 8, **characterized in that** by means of the pressing tool (5), in the region of the abutting edges (6, 6') of the filler core (8) to be produced, on at least two mutually parallel abutting edges (6, 6'), i.e. on the right-hand, left-hand abutting edge (6, 6') and/or on the upper, lower abutting edge, a step fold (10, 10') is impressed in each case into these abutting edges (6, 6') into the surfaces facing away from each other of these parallel abutting edges (6, 6') by means of two mutually opposite punches (7, 7') correspondingly arranged in the pressing tool (5), so that the pairs of abutting edges have a step fold (10) impressed on the upper side of the filler core (8) and a step fold (10') impressed on the lower side of the filler core (8).

10. Method according to one or more of the preceding claims, **characterized in that** the filler cores (8) produced by means of the method are produced in particular for high-temperature applications using high-temperature-resistant, preferably ceramic, fibers.

11. Method according to one or more of the preceding claims, **characterized in that** one fiberglass mat (11, 11') each is inserted into the pressing tool (5) on the top and bottom sides with the interposition of a light core (13).

12. Method according to claim 11, **characterized in that** a fiberglass mat (11) with sections of higher and/or lower density than the other sections of the fiberglass mat (11) is inserted into the pressing tool (5), or several fiberglass mats (11, 11') each with a different density are inserted into the pressing tool (5) and pressed therein to form a filler core (8) with a density which is variable in sections and adapted to the respective requirements of use.

13. Method according to one or more of the preceding claims, **characterized in that** the pressing tool (5) is provided with contours projecting in the direction of the fiberglass mat or fiberglass mats (11, 11') inserted into the pressing tool, by means of which during the pressing process cavities, preferably channels (14), can be impressed into the fiberglass mat or fiberglass mats.

14. Method according to one or more of the preceding claims, **characterized in that** the pressing tool (5) as such is actively heatable or is passively heatable by means of a furnace surrounding the pressing tool (5).

15. Method according to one or more of the preceding claims, **characterized in that** with this method also 3D molded bodies, such as pipe half shells or corner connectors, can be produced by means of corresponding pressing tools (5).

16. Filler core produced by a method according to the preceding claims 1-15, **characterized in that** the filler core (8) has a thermal conductivity λ in a range between 0.001 W/mK and 0.004 W/mK at a residual gas pressure of 0.1 mbar and a mean temperature between 50 and 300°C.

## Revendications

1. Procédé pour la fabrication d'un noyau de remplissage (8) avec une structure de couches, comprenant les étapes suivantes :
- le matériau de départ est une nappe de fibres ou un non-tissé en fibres dont le diamètre moyen est choisi en fonction des propriétés souhaitées du matériau du noyau de remplissage (8) à fabriquer, en particulier de ses propriétés d'isolation et de soutien,
- lesquelles nappes de fibres ou non-tissés (3) sont placés dans l'outil de pressage (5) de manière à conserver l'orientation prédéfinie des fibres au cours d'un procédé de formage par voie humide ou d'une application à sec après la fabrication des fibres, de sorte qu'après la fin de l'opération de pressage, aucune fibre du noyau de remplissage (8) ne se trouve dans le sens principal du principal flux thermique,
- les noyaux de remplissage (8) étant fabriqués, dans le cadre du procédé selon la présente invention, de sorte que des couches différentes sont d'abord introduites dans l'outil de pressage (5), à savoir un non-tissé de fibres de verre (11, 11') sur chacune des faces supérieure et inférieure, en intercalant des granulés de silicate (12), de préférence légers, de préférence composés au moins en majeure partie de microbilles de verre creuses,
- ces nappes ou non-tissés de fibres (3) sont ensuite compactées au moyen d'un outil de pressage (5), pouvant de préférence être chauffé, pour obtenir une structure au moins approximativement microporeuse, de telle sorte qu'une longueur libre centrale aussi grande que possible soit disponible à l'intérieur du noyau de remplissage (8) pour la migration de molécules de gaz même sous un vide seulement modéré, la pression de gaz résiduelle à l'intérieur du noyau de remplissage (8) étant d'autant moins diminuée que la porosité de la structure du noyau de remplissage (8) est fine afin d'exclure ou tout au moins de réduire la convection par les gaz,
- le taux de compactage des fibres étant ajusté en fonction de leur diamètre de telle manière que le noyau de remplissage (8) possède une conductibilité thermique aussi faible que possible, sachant qu'il existe un degré de compactage optimal en deçà et au-delà duquel la conductibilité thermique du noyau de remplissage (8) augmente, et
- un formage et/ou une définition du contour en deux ou trois dimensions du noyau de remplissage (8) étant réalisés au moyen du même outil de pressage (5) dans la même étape de travail,
- et le noyau de remplissage (8) fabriqué selon ce procédé ne contient aucun liant et est maintenu dans la forme prédéfinie uniquement par un engrènement physique des fibres.

2. Procédé selon la revendication 1, **caractérisé en ce que** si le noyau de remplissage (8) est utilisé dans des isolations sous vide, la pression de gaz résiduelle est ajustée lors de l'établissement du vide dans le noyau de remplissage (8) de façon à laisser la plus grande distance libre possible pour les molécules de gaz résiduelles restant dans le noyau de remplissage (8) lors de l'établissement du vide.

3. Procédé selon la revendication 1 ou 2, **caractérisé en ce que** l'outil de pressage (5) est associé à un élément chauffant, de sorte que pendant l'opération de pressage du procédé de fabrication du noyau de remplissage (8), un traitement thermique du noyau de remplissage (8) prenant la forme d'une thermocompression est réalisé de telle manière que les fibres soient amenés à un état sans tension et que le noyau de remplissage (8) soit fabriqué après le retrait de l'outil de pressage (5).

4. Procédé selon la revendication 3, **caractérisé en ce que** le traitement thermique vise à obtenir la résistance à la compression souhaitée du corps de remplissage à fabriquer en tenant compte d'une relation entre la compressibilité du noyau de remplissage (8) obtenue après la fin du procédé de fabrication et le diamètre des fibres utilisées ainsi que leur densité.

5. Procédé selon la revendication 4, **caractérisé en ce que** l'opération de pressage est réalisée à une température qui correspond au moins pour l'essentiel aux deux tiers de la température de plastification du non-tissé en fibres de verre (11, 11') à presser ou du non-tissé en fibres comparable (3), mais dans tous les cas inférieure à la température de fusion des fibres de verre ou des fibres comparables à presser.

6. Procédé selon une ou plusieurs des revendications précédentes, **caractérisé en ce qu'**il est mis en oeuvre avec des fibres de verre ou avec des fibres comparables ayant un diamètre de fibres compris entre 1 µm et 6 µm.

7. Procédé selon une ou plusieurs des revendications précédentes, **caractérisé en ce que** la force de pressage de l'outil de pressage (5), le remplissage du moule ou la quantité de fibres sont ajustables en fonction de la densité souhaitée de la pièce moulée pour le noyau de remplissage (8) à fabriquer en fonction d'une densité de la pièce moulée de l'ordre d'environ 0,26 g/cm³.

8. Procédé selon une ou plusieurs des revendications précédentes, **caractérisé en ce qu'**un contour est imprimé au moyen de l'outil de pressage (5) dans le noyau de remplissage (8) à fabriquer.

9. Procédé selon la revendication 8, **caractérisé en ce que** l'outil de pressage (5) imprime au moyen de deux poinçons (7, 7') se faisant face et disposés en conséquence dans l'outil de pressage (5), au niveau des rebords (6, 6') du noyau de remplissage (8) à fabriquer, sur au moins deux rebords (6, 6') parallèles l'un à l'autre, à savoir les rebords (6, 6') de droite et de gauche et/ou les rebords supérieur et inférieur, dans les surfaces tournées à l'opposé l'une de l'autre de ces rebords (6, 6') parallèles, un pli en gradin (10, 10') dans chacun de ces rebords (6, 6'), de sorte que les paires de rebords possèdent un pli en gradin (10) imprimé sur la face supérieure du noyau de remplissage (8) et un pli en gradin (10') imprimé sur la face inférieure du noyau de remplissage (8).

10. Procédé selon une ou plusieurs des revendications précédentes, **caractérisé en ce que** les noyaux de remplissage (8) fabriqués selon le procédé sont fabriqués en particulier pour des applications à haute température en utilisant de fibres résistantes à haute température, de préférence des fibres de céramique.

11. Procédé selon une ou plusieurs des revendications précédentes, **caractérisé en ce qu'**un non-tissé de fibres de verre (11, 11') est introduit sur la face supérieure et sur la face inférieure de l'outil de pressage (5) en intercalant un noyau léger (13).

12. Procédé selon la revendication 11, **caractérisé en ce qu'**un non-tissé de fibres de verre (11) ayant des zones de plus grande et/ou de plus petite densité que les autres zones du non-tissé de fibres de verre (11) est introduit dans l'outil de pressage ou que plusieurs non-tissés de fibres de verre (11, 11') ayant chacun une densité différente sont introduits dans l'outil de pressage (5) et pressés dans celui-ci pour obtenir un noyau de remplissage (8) dont la densité est variable par zones et adaptée aux besoins de l'usage prévu.

13. Procédé selon une ou plusieurs des revendications précédentes, **caractérisé en ce que** l'outil de pressage (5) est muni de contours qui dépassent en direction du ou des non-tissés en fibres de verre (11, 11') déposés dans l'outil de pressage, au moyen desquels il peut imprimer des creux, de préférence des canaux (14), dans le non-tissé ou les non-tissés de fibres de verre pendant l'opération de pressage.

14. Procédé selon une ou plusieurs des revendications précédentes, **caractérisé en ce que** l'outil de pressage (5) peut être chauffé de façon active ou chauffé de façon passive au moyen d'un four renfermant l'outil de pressage (5).

15. Procédé selon une ou plusieurs des revendications précédentes, **caractérisé en ce que** ce procédé permet aussi de fabriquer des éléments moulés en 3D, par exemple des demi-coques de tuyaux ou des raccords d'angle, au moyen d'outils de pressage (5) correspondants.

16. Noyau de remplissage fabriqué par un procédé selon les revendications 1 à 15, **caractérisé en ce que** le noyau de remplissage (8) possède une conductibilité thermique λ comprise entre 0,001 W/mK et 0,004 W/mK à une pression de gaz résiduelle de 0,1 mbar et à une température moyenne comprise entre 50 et 300 °C.
